# EUROPEAN PATENT APPLICATION

(11) **EP 4 800 315 A1**
(43) Date of publication of application: **02.09.2026**
(21) Application number: 24884216.3
(22) Date of filing: 02.09.2024
(51) Int. Cl.: F24F 11/89

(54) **AIR CONDITIONING SYSTEM, AND METHOD FOR REGULATING SYSTEM LOAD BY MEANS OF HOT GAS BYPASS**

(30) Priority: 30.10.2023 CN 202311425278
(71) Applicant: York (Wuxi) Air Conditioning And Refrigeration Co., Ltd., Wuxi Jiangsu 214028 (CN); Tyco Fire & Security GmbH, 8212 Neuhausen am Rheinfall, Schaffhausen (CH)
(72) Inventor: FAN, Bingyan, Wuxi, Jiangsu 214028 (CN); CHEN, Yunxin, Wuxi, Jiangsu 214028 (CN); MAO, Yaohui, Wuxi, Jiangsu 214028 (CN); WU, Yawei, Wuxi, Jiangsu 214028 (CN)
(74) Representative: Meissner Bolte Nürnberg
(86) International application number: PCT/CN2024/116227
(87) International publication number: WO 2025/092209

(57) **Abstract**

A method for regulating a system load by means of hot gas bypass. The method comprises the following steps: acquiring a real-time outlet water temperature and a target outlet water temperature; determining a relationship between the magnitudes of the real-time outlet water temperature and the target outlet water temperature and a trend of change in the absolute value of the difference between the real-time outlet water temperature and the target outlet water temperature; on the basis of the relationship between the magnitudes of the real-time outlet water temperature and the target outlet water temperature and the trend of change in the absolute value of the difference between the real-time outlet water temperature and the target outlet water temperature that are determined in the above step, determining an amount of change in the valve opening of hot gas bypass; and regulating the valve opening of the hot gas bypass, thereby adjusting a system load. On the basis of different fluctuation trends of a water temperature with regard to approaching or deviating from a target value, an independent PID control mode is separately used, i.e., a dual-PID control mode, so that the system controls the water temperature more precisely and stably, the amplitude of fluctuation of the water temperature is smaller, and the system is more energy-saving.

## Description

### Technical Field

The present application relates to an air conditioning system, and a method for regulating a system load, in particular to an air conditioning system having hot gas bypass and a method for regulating a system load by means of hot gas bypass.

### Background Art

A current air conditioning system usually adopts a refrigeration unit using a centrifugal compressor as a driving source. In order to expand an operating boundary of the air conditioning system, the following modes are usually adopted to perform load reduction (refrigeration capacity reduction) operations on the system: variable speed drive (VSD) and inlet guide vane regulation (IGV). After all the above load reduction capabilities have been fully utilized, if a situation is encountered where the load needs to be further reduced on site, hot gas bypass is often switched on, thereby further reducing the system load and expanding the refrigeration capacity range of the system. A hot gas bypass valve is provided on the hot gas bypass, and different openings of the hot gas bypass valve correspond to different load reduction capabilities. By regulating the opening of the hot gas bypass valve, the load reduction capability of the hot gas bypass is correspondingly regulated and controlled.

### Summary of the Invention

In industrial process control, control performed according to a proportion, integral, and derivative of an error generated by comparing information collected from real-time data of a controlled object with a given value is called proportional integral derivative (PID) control for short. In the prior art, regulating the opening of a hot gas bypass valve in an air conditioning system usually adopts single PID control. Single PID control means that only one set of control coefficients (proportional coefficient Kₚ, integral time constant Tᵢ, and derivative time constant T_{d}) is adopted in a differential equation of PID control to meet changing situations of different variables. However, the above single PID control mode has a lag in the regulation of a compressor load, and cannot quickly and precisely respond to a system water temperature change caused by the load, making the water temperature difficult to stabilize and fluctuate greatly. Therefore, a control method that regulates the system water temperature more precisely and stably is needed.

In order to control the water temperature more precisely and stably according to changes in the load on site and make the water temperature fluctuation smaller, considering the indirectness and lag of load regulation by means of hot gas bypass, the present application provides a method for regulating a system load by adopting dual-PID control of hot gas bypass. Specifically, according to different trends of change in the water temperature relative to a set value, that is, the water temperature approaching the set value or deviating from the set value, different PID control modes are set, thereby achieving more precise control of the opening of the hot gas bypass valve. Therefore, the control method of the present application controls the water temperature more stably and more precisely, and is relatively energy-saving compared to the single PID control mode.

Therefore, according to a first aspect of the present application, the present application provides a method for regulating a system load by means of hot gas bypass, characterized in that the method comprises the following steps: S01, acquiring a real-time outlet water temperature and a target outlet water temperature; S02, determining a relationship between magnitudes of the real-time outlet water temperature and the target outlet water temperature and a trend of change in an absolute value of a difference between the real-time outlet water temperature and the target outlet water temperature; S03, on the basis of the relationship between the magnitudes of the real-time outlet water temperature and the target outlet water temperature and the trend of change in the absolute value of the difference between the real-time outlet water temperature and the target outlet water temperature that are determined in step S02, determining an amount of change in valve opening of the hot gas bypass; and S04, on the basis of the amount of change in the valve opening determined in step S03, regulating the valve opening of the hot gas bypass, thereby regulating the system load.

According to the first aspect of the present application, it is characterized in that: steps S01 to S04 are cyclically executed in a set water temperature regulating period.

According to the first aspect of the present application, it is characterized in that: in step S03, if the absolute value of the difference between the real-time outlet water temperature and the target outlet water temperature has an increasing trend, a first PID control method is used to determine the amount of change in the valve opening of the hot gas bypass; or if the absolute value of the difference between the real-time outlet water temperature and the target outlet water temperature has a decreasing trend, a second PID control method is used to determine the amount of change in the valve opening of the hot gas bypass.

According to the first aspect of the present application, it is characterized in that: in step S03, if the real-time outlet water temperature is greater than the target outlet water temperature and the absolute value of the difference between the real-time outlet water temperature and the target outlet water temperature has an increasing trend, the valve opening of the hot gas bypass is decreased in step S04; if the real-time outlet water temperature is less than the target outlet water temperature and the absolute value of the difference between the real-time outlet water temperature and the target outlet water temperature has an increasing trend, the valve opening of the hot gas bypass is increased in step S04; if the real-time outlet water temperature is greater than the target outlet water temperature and the absolute value of the difference between the real-time outlet water temperature and the target outlet water temperature has a decreasing trend, the valve opening of the hot gas bypass is decreased in step S04; or if the real-time outlet water temperature is less than the target outlet water temperature and the absolute value of the difference between the real-time outlet water temperature and the target outlet water temperature has a decreasing trend, the valve opening of the hot gas bypass is increased in step S04.

According to the first aspect of the present application, it is characterized in that: the first PID control method has a first set of control parameters, and the second PID control method has a second set of control parameters, wherein the first set of control parameters is different from the second set of control parameters, and the first set of control parameters and the second set of control parameters are acquired through system debugging.

According to the first aspect of the present application, it is characterized in that: the first set of control parameters comprises a first proportional coefficient, a first integral time constant, and a first derivative time constant, and the second set of control parameters comprises a second proportional coefficient, a second integral time constant, and a second derivative time constant.

According to the first aspect of the present application, it is characterized in that: when the trend of change in the absolute value of the difference between the real-time outlet water temperature and the target outlet water temperature increases, an amplitude of change in the amount of change in the valve opening increases, or when the trend of change in the absolute value of the difference between the real-time outlet water temperature and the target outlet water temperature decreases, the amplitude of change in the amount of change in the valve opening decreases.

According to the first aspect of the present application, it is characterized in that: when an operating pressure ratio of a system increases, an amplitude of change in the amount of change in the valve opening decreases, or when the operating pressure ratio of the system decreases, the amplitude of change in the amount of change in the valve opening increases.

According to a second aspect of the present application, the present application provides an air conditioning system, comprising a unit, a sensor, and a controller, wherein the sensor acquires a real-time outlet water temperature from the unit, wherein: the air conditioning system further comprises a hot gas bypass path, the hot gas bypass path is provided with a hot gas bypass valve, wherein the controller regulates a load of the system according to the method for regulating the system load by means of the hot gas bypass as described in the first aspect of the present application.

Other features, advantages and embodiments of the present application may be set forth or become apparent by consideration of the following detailed description, drawings and claims. In addition, it should be understood that the above summary of the invention and the following specific embodiments are all exemplary and intended to provide further explanations rather than limit the scope of the present application as claimed. However, the detailed description and specific examples indicate only preferred embodiments of the present application. Various changes and modifications within the spirit and scope of the present application will become apparent to those skilled in the art from this detailed description.

### Brief Description of the Drawings

These and other features and advantages of the present application may be better understood by reading the following detailed description with reference to the drawings, wherein:
FIG. 1 shows a schematic structural diagram of an air conditioning system of the present application.
FIG. 2 shows a control flowchart of regulating a system load by means of hot gas bypass.
FIG. 3 shows a schematic diagram of fluctuations of an actual outlet water temperature with changes in valve opening under different PID control methods.
FIG. 4 shows a flow characteristic curve diagram of an electric butterfly valve.
FIG. 5A shows a curve relationship diagram between an amplitude of change in opening of a hot gas bypass valve and a system compression ratio.
FIG. 5B shows a curve relationship diagram between an amplitude of change in opening of a hot gas bypass valve and a system load.
FIG. 6 is a block diagram of a controller of an air conditioning system of the present application, showing specific components and connection relationships of the controller.

### Detailed Description of Embodiments

Detailed implementation of the present application will be described below with reference to the drawings of the specification. It should be understood that, where possible, identical or similar reference numerals are used in the present application to refer to identical components.

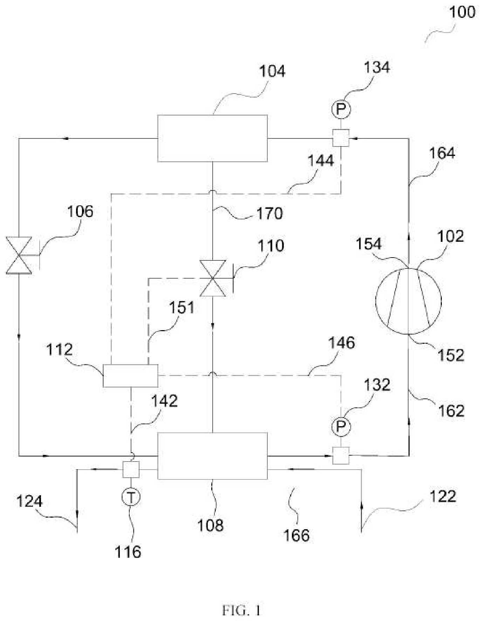

FIG. 1 is a schematic structural diagram of an air conditioning system of the present application, used to show main functional modules of the air conditioning system of the present application.

As shown in FIG. 1, a unit of the air conditioning system 100 of the present application comprises a compressor 102, a condenser 104, an expansion valve 106, and an evaporator 108 that are in fluid communication in sequence, wherein the compressor 102 has a suction port 152 and a discharge port 154; the suction port 152 of the compressor 102 is in fluid communication with the evaporator 108 through a suction pipe 162; the discharge port 154 of the compressor 102 is in fluid communication with the condenser 104 through a discharge pipe 164; the condenser 104 is in fluid communication with the expansion valve 106; and the expansion valve 106 is in fluid communication with the evaporator 108. For those of ordinary skill in the art, according to different energy-saving requirements, an economizer and an economizer expansion valve may also be arranged in the air conditioning system 100, which will not be described in detail here.

A refrigerant pipeline of the air conditioning system 100 exchanges heat with water flow in a water pipe 166 at the evaporator 108, but a refrigerant in the evaporator 108 and the water flow in the water pipe 166 are in different pipelines respectively and are not in fluid communication with each other. The water pipe 166 comprises a water inlet pipe 122 and a water outlet pipe 124. An ambient-temperature water source may flow through the water inlet pipe 122 to the vicinity of the evaporator 108 to exchange heat with the refrigerant in the evaporator 108. The refrigerant in the evaporator 108 may take away the heat of the ambient-temperature water source in the water inlet pipe 122, forming low-temperature water that flows out from the water outlet pipe 124.

Still referring to FIG. 1, the air conditioning system 100 further comprises an evaporator pressure sensor (system suction pressure sensor) 132, a condenser pressure sensor (system discharge pressure sensor) 134, and an outlet water temperature sensor 116. The evaporator pressure sensor 132 is arranged on the suction pipe 162 between the suction port 152 of the compressor 102 and the evaporator 108, and is used to detect a pressure of the evaporator 108 (suction pressure of the air conditioning system); the condenser pressure sensor 134 is arranged on the discharge pipe 164 between the discharge port 154 of the compressor 102 and the condenser 104, and is used to detect a pressure of the condenser 104 (discharge pressure of the air conditioning system); and the outlet water temperature sensor 116 is arranged on the water outlet pipe 124, and is used to detect an actual outlet water temperature of chilled water.

Continuing referring to FIG. 1, a high-temperature and high-pressure gaseous refrigerant discharged from the discharge port 154 of the compressor 102 enters the condenser 104 and releases heat to condense into a medium-temperature liquid refrigerant. The medium-temperature liquid refrigerant flows to a main expansion valve 106, and after throttling and pressure reduction by the main expansion valve 106, a low-temperature gas-liquid two-phase refrigerant is formed and enters the evaporator 108. In the evaporator 108, the low-temperature gas-liquid two-phase refrigerant exchanges heat with ambient-temperature water from the water inlet pipe 122, and absorbs the heat of the water to evaporate into a gaseous refrigerant. Finally, the gaseous refrigerant returns into the compressor 102 through the suction port 152 of the compressor 102 to complete the cyclic flow of the refrigerant. The ambient-temperature water in the water inlet pipe 122 exchanges heat with the low-temperature gas-liquid two-phase refrigerant in the evaporator 108, and after releasing heat, forms low-temperature chilled water, which flows out from the water outlet pipe 124 to complete the heat exchange between the water and the refrigerant.

As shown in FIG. 1, the air conditioning system 100 further comprises a hot gas bypass path 170, the hot gas bypass path 170 places the condenser 104 and the evaporator 108 in fluid communication, and is used to bypass the high-temperature gaseous refrigerant in the condenser 104 into the evaporator 108, thereby affecting heat exchange between the water and the refrigerant in the evaporator 108 and playing a role of regulating the system load. A hot gas bypass valve 110 is arranged on the hot gas bypass path 170 and is used to regulate a flow rate of the refrigerant in the hot gas bypass path 170.

Continuing as shown in FIG. 1, the air conditioning system 100 further comprises a controller 112, which is in communication connection with the evaporator pressure sensor 132, the condenser pressure sensor 134, the outlet water temperature sensor 116, and the hot gas bypass valve 110 respectively, for respectively receiving a pressure parameter of the evaporator 108, a pressure parameter of the condenser 104, and an actual outlet water temperature parameter of the chilled water, calculating an amount of change in valve opening of the hot gas bypass valve 110 according to each received parameter and a preset target outlet water temperature, and regulating the valve opening of the hot gas bypass valve 110 according to the calculated amount of change in valve opening, thereby controlling the actual outlet water temperature of the chilled water.

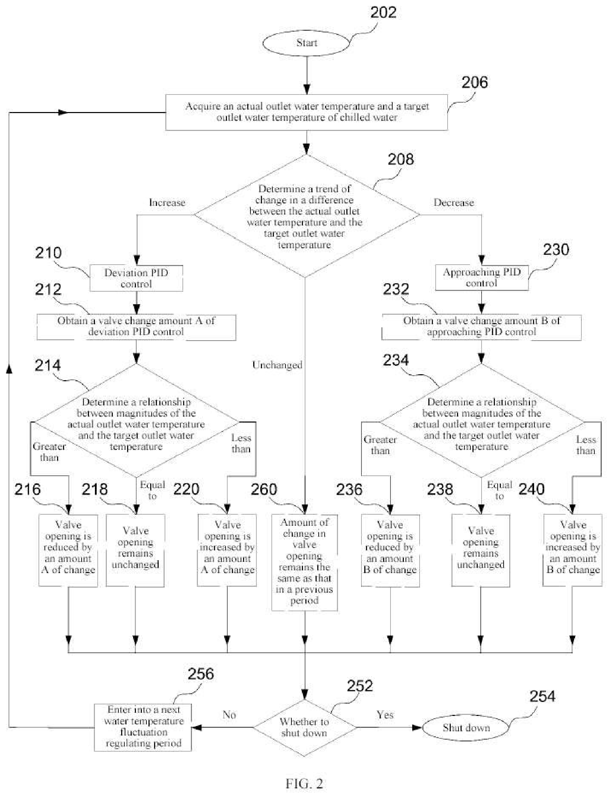

FIG. 2 shows a control flowchart of regulating a system load by means of hot gas bypass.

As shown in FIG. 2, in step 202, when the air conditioning system enters into a water temperature regulating process of a hot gas bypass stage, the process turns to step 206.

In step 206, the controller 112 collects in real time actual outlet water temperature parameters of the chilled water collected by the outlet water temperature sensor 116 within a preset water temperature regulating period, and simultaneously acquires the preset target outlet water temperature parameter. After the operation of step 206 is completed, the process turns to step 208.

In step 208, the controller 112 compares the plurality of actual outlet water temperature parameters of the chilled water collected in step 206 with the set target outlet water temperature parameter, and determines a trend of change of the actual outlet water temperature relative to the target outlet water temperature, that is, a trend of change in an absolute value of a difference between the actual outlet water temperature and the target outlet water temperature.

If the absolute value of the difference between the actual outlet water temperature and the target outlet water temperature has an increasing trend, the process turns to step 210; if the absolute value of the difference between the actual outlet water temperature and the target outlet water temperature has a decreasing trend, the process turns to step 230; and if the absolute value of the difference between the actual outlet water temperature and the target outlet water temperature remains unchanged, the process turns to step 260.

In steps 210 and 212, through the plurality of collected actual outlet water temperature parameters of the chilled water and the set target outlet water temperature parameter, the amount of change in the valve opening of the hot gas bypass valve 110 is calculated as A using a deviation PID control method, and a function formula of the deviation PID control method is as follows: $rc = error \times A \times {T}_{i} + B \times rate \times {K}_{p} ,$
wherein rc represents the amount of change in the valve opening, *error* represents an absolute value of a difference between a current water temperature and the target water temperature, *rate* represents an actual water temperature difference between a current period and a previous period, and A and B are constants. Through unit debugging of the air conditioning system, a plurality of sets of values of *Kₚ, Tᵢ* and *T_{d}* are obtained under different working conditions, for example, *Kₚ =* 5, *Tᵢ* = 80, *T_{d}* = 0, or *Kₚ* = 50, *Tᵢ =* 10, *T_{d} =* 0.

After the operations of steps 210 and 212 are completed, the process turns to step 214.

In step 214, the controller 112 compares the collected plurality of actual outlet water temperature parameters of chilled water with the set target outlet water temperature parameter to determine a relationship between magnitudes of the actual outlet water temperature and the target outlet water temperature.

If the actual outlet water temperature is greater than the target outlet water temperature, the process turns to step 216, and the valve opening is reduced by an amount A of change; if the actual outlet water temperature is less than the target outlet water temperature, the process turns to step 220, and the valve opening is increased by an amount A of change; and if the actual outlet water temperature is equal to the target outlet water temperature, the process turns to step 218, and the valve opening remains unchanged.

In steps 230 and 232, through the collected plurality of actual outlet water temperature parameters of chilled water and the set target outlet water temperature parameter, an approaching PID control method is used to calculate the amount B of change in valve opening of the hot gas bypass valve 110. A function formula of the approaching PID control method is basically the same as the function formula of the deviation PID control method, and a difference lies in that the plurality of sets of values of *Kₚ, Tᵢ* and *Tᵢ* obtained by unit debugging of the air conditioning system are different, for example, *Tᵢ =* 5, *Tᵢ =* 60, and *T_{d} =* 0.

After the operations of steps 230 and 232 are completed, the process turns to step 234.

In step 234, the controller 112 compares the collected plurality of actual outlet water temperature parameters of chilled water with the set target outlet water temperature parameter to determine a relationship between magnitudes of the actual outlet water temperature and the target outlet water temperature.

If the actual outlet water temperature is greater than the target outlet water temperature, the process turns to step 236, and the valve opening is reduced by an amount B of change; if the actual outlet water temperature is less than the target outlet water temperature, the process turns to step 240, and the valve opening is increased by an amount B of change; and if the actual outlet water temperature is equal to the target outlet water temperature, the process turns to step 238, and the valve opening remains unchanged.

In step 260, since the trend of change in the actual outlet water temperature relative to the target outlet water temperature remains unchanged, the amount of change in valve opening remains the same as that in the previous regulating period. If the deviation PID control method is used to regulate the valve opening in the previous regulating period, the deviation PID control method is also used to regulate the valve opening in this period. Similarly, if the approaching PID control method is used to regulate the valve opening in the previous regulating period, the approaching PID control method is also used to regulate the valve opening in this period.

After the operations of steps 216, 218, 220, 236, 238, 240, and 260 are completed, the process turns to step 252.

In step 252, after regulation in the current regulating period, the controller 112 determines whether shutdown is required (for example, the air conditioning system needs to be shut down for maintenance). If shutdown is required, the process turns to step 254 to perform a shutdown operation; and if shutdown is not required, the process turns to step 256 to perform an operation of a next water temperature fluctuation regulating period, and the control process of the above steps 206 to 252 is repeated.

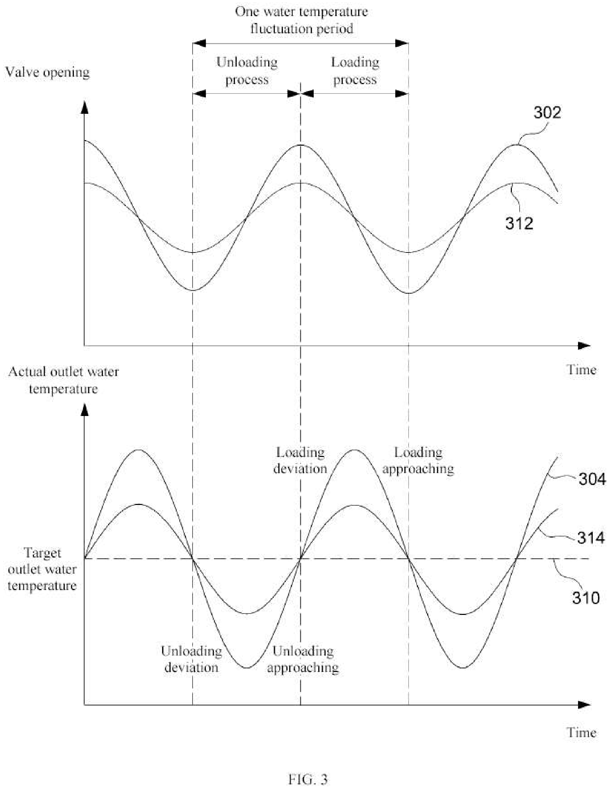

FIG. 3 shows a schematic diagram of fluctuations of an actual outlet water temperature with changes in valve opening under different PID control methods.

As shown in FIG. 3, a curve 302 shows a fluctuation situation of the valve opening of the hot gas bypass valve 110 over time under a single PID control mode; a curve 304 shows a fluctuation situation of the actual outlet water temperature over time under the single PID control mode; a curve 312 shows a fluctuation situation of the valve opening of the hot gas bypass valve 110 over time under a dual-PID control mode (deviation PID and approaching PID controlled respectively) of the present application; and a curve 314 shows a fluctuation situation of the actual outlet water temperature over time under the dual-PID control mode (deviation PID and approaching PID controlled respectively) of the present application. A dashed line 310 represents a set value of the target outlet water temperature.

It can be seen that within one water temperature fluctuation regulating period, the process of increasing the valve opening is an unloading process of the unit of the air conditioning system, and the process of decreasing the valve opening is a loading process of the unit of the air conditioning system. When the actual outlet water temperature is lower than the target outlet water temperature, the unit needs to be unloaded so that the actual outlet water temperature rises to the target water temperature; and when the actual outlet water temperature is higher than the target outlet water temperature, the unit needs to be loaded so that the actual outlet water temperature decreases to the target water temperature.

Based on the working principle for regulating the unit load by means of the hot gas bypass, during the unloading process and loading process of the unit of the air conditioning system, a response process of the change in the actual outlet water temperature has a certain lag, that is, the change in the actual outlet water temperature has a lag in time relative to the change in valve opening. For example, when the valve opening increases (unit unloading), the water temperature does not rise immediately, but continues to decrease for a period of time following the previous decreasing trend of the water temperature, then responds to the increase of valve opening and rises; and when the valve opening decreases (unit loading), the water temperature does not decrease immediately, but continues to rise for a period of time following the previous rising trend of the water temperature, then responds to the decrease of valve opening and decreases.

Continuing as shown in FIG. 3, for ease of understanding, the process in which the actual outlet water temperature deviates from the target outlet water temperature during the unloading process is defined as an unloading deviation process, the process in which the actual outlet water temperature approaches the target outlet water temperature during the unloading process is defined as an unloading approaching process, the process in which the actual outlet water temperature deviates from the target outlet water temperature during the loading process is defined as a loading deviation process, and the process in which the actual outlet water temperature approaches the target outlet water temperature during the loading process is defined as a loading approaching process. The unloading deviation process corresponds to step 220 in FIG. 2, the unloading approaching process corresponds to step 240 in FIG. 2, the loading deviation process corresponds to step 216 in FIG. 2, and the loading approaching process corresponds to step 236 in FIG. 2. Based on the characteristic of the lag of load regulation by means of the hot gas bypass, in the two stages of loading deviation and unloading deviation, through the deviation PID control method, the hot gas bypass needs to have a larger action amplitude (i.e., larger valve opening regulation amount) to respond to the change in the water temperature deviating from the target value; however, in the two stages of loading approaching and unloading approaching, through the approaching PID control method, the hot gas bypass needs to have a smaller action amplitude (i.e., smaller valve opening regulation amount), thereby releasing energy brought by the previous large-amplitude action.

As can be seen from FIG. 3, the actual outlet water temperature curve 314 under the dual-PID control mode (deviation PID and approaching PID controlled respectively) of the present application has a smaller fluctuation amplitude compared to the actual outlet water temperature curve 304 under the single PID control mode. In the embodiments of the present application, after the dual-PID control mode is adopted, the fluctuation amplitude of the actual outlet water temperature can be controlled within a range of ±0.2°C. If the dual-PID control mode is not adopted and only the single PID control mode is adopted, the fluctuation amplitude of the actual outlet water temperature will reach ±0.5°C, which is much higher than the water temperature fluctuation amplitude when the dual-PID control mode is adopted. Therefore, the dual-PID control mode of the present application provides more precise control of the water temperature. Similarly, the valve opening curve 312 under the dual-PID control mode of the present application has a smaller fluctuation amplitude compared to the valve opening curve 302 under the single PID control mode. From the perspective of system control, the smaller-amplitude regulation of valve opening in the present application is more energy-saving compared to the valve opening regulation in the prior art.

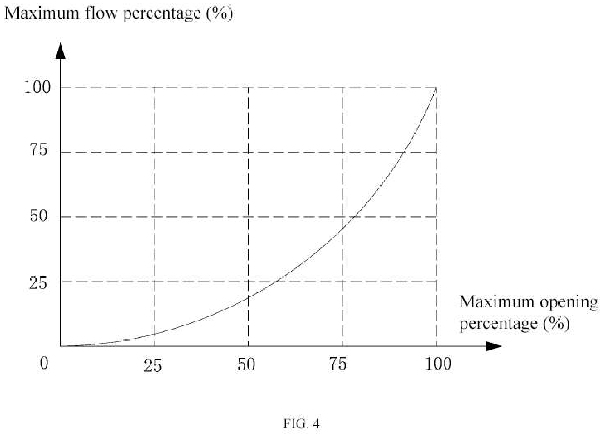

FIG. 4 shows a flow characteristic curve diagram of an electric butterfly valve. The hot gas bypass valve 110 of the present application adopts an electric butterfly valve. According to the flow characteristics of the electric butterfly valve, the change in opening of the electric butterfly valve and the change in a flow rate of the refrigerant flowing through the electric butterfly valve are not in a linear relationship, but rather in a curve relationship as shown in FIG. 4.

As shown in FIG. 4, when the opening of the electric butterfly valve is small, the flow rate of the refrigerant does not change significantly with the opening. As the opening of the electric butterfly valve increases, the amplitude of change in the flow rate of the refrigerant with the opening gradually increases, that is, the larger the opening of the electric butterfly valve, the greater the rate of change of the flow rate of the refrigerant with valve opening, and the smaller the opening of the electric butterfly valve, the smaller the rate of change of the flow rate of the refrigerant with valve opening.

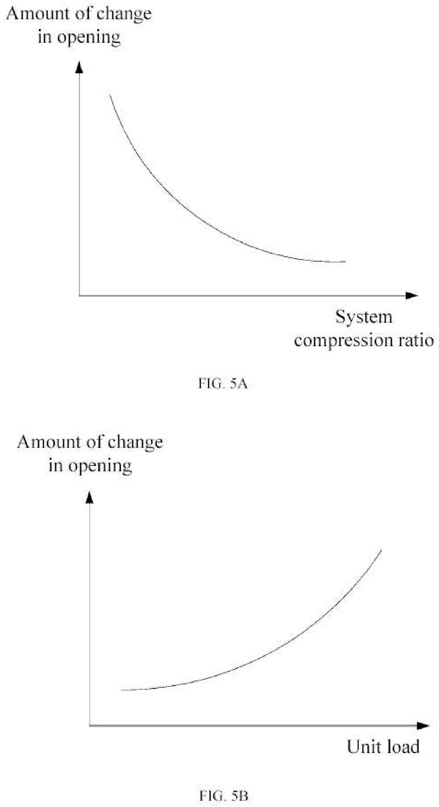

FIGS. 5A-5B show diagrams of a curve relationship between an amplitude of change in opening of the hot gas bypass valve and a system compression ratio and a unit load.

FIGS. 5A-5B show schematic diagrams of the opening regulation amplitude of the hot gas bypass valve changing with changes in the system compression ratio and the system load during the process of the unit of the air conditioning system entering into the stage of load reduction by means of the hot gas bypass.

As shown in FIG. 5A, based on the flow characteristics of the hot gas bypass valve and the system compression ratio, the higher the system compression ratio, that is, the higher the ratio of the pressure of the condenser 104 to the pressure of the evaporator 108, the higher the pressure of the condenser 104, that is, the higher the temperature of refrigerant vapor. At this time, at the same opening of the hot gas bypass valve 110, the greater the energy of the refrigerant vapor flowing through the hot gas bypass path 170. That is to say, during the loading or unloading process, the same opening calculated by the deviation PID has a greater impact on the load, and it is necessary to reduce the action amplitude of the hot gas bypass valve approaching the PID to better cope with the load impact caused by gas bypass with greater energy. Similarly, during the loading or unloading process, if the approaching PID is fixed, the higher the system compression ratio, the smaller the action amplitude of the hot gas bypass calculated by the deviation PID needs to be reduced to offset the greater impact on the load caused by the valve opening in the previous period. In summary, the higher the system compression ratio, the smaller the valve opening regulation (amount of change) amplitude of the hot gas bypass valve 110; and the higher the system compression ratio, the greater the valve opening regulation (amount of change) amplitude of the hot gas bypass valve 110.

The magnitude of the system load can be partially reflected in a difference between inlet and outlet water temperatures or the difference between the actual outlet water temperature and the target outlet water temperature. As shown in FIG. 5B, under the condition that other operating environments of the system are the same, the larger the above temperature difference is, the larger the load of the system is; and the smaller the above temperature difference is, the smaller the load of the system is. Further, the lower the system load drops, the larger the opening of the hot gas bypass valve is; and the larger the system load is, the smaller the opening of the hot gas bypass valve is. In combination with a flow characteristic curve of the electric butterfly valve shown in FIG. 4, when the valve opening is large, the same valve action amplitude brings about a larger flow change, and the impact on the system load is also larger. Based on the above valve characteristics, when the system load is low, reducing the amplitude of valve opening regulation (amount of change) is more conducive to the stability of the water temperature.

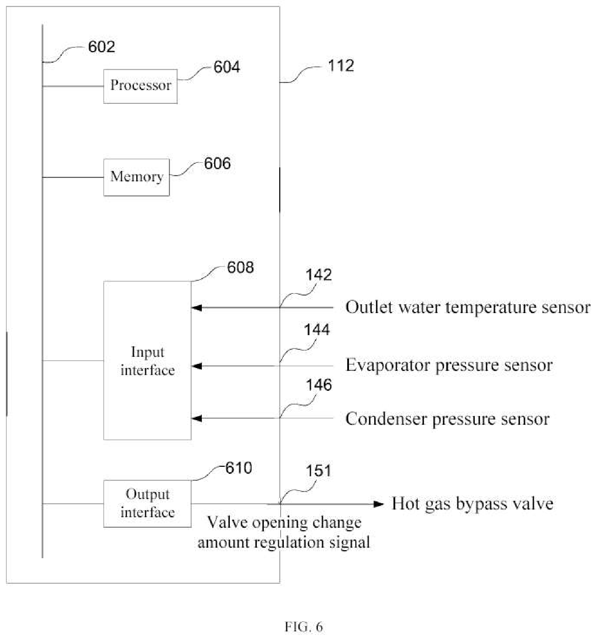

FIG. 6 is a block diagram of a controller of an air conditioning system of the present application, showing specific components and connection relationships of the controller 112. The controller 112 can store and execute programs of the control flow shown in FIG. 2, and store and call various parameters required by the control flow.

As shown in FIG. 6, the system controller 112 comprises a bus 602, a processor 604, a memory 606, an input interface 608, and an output interface 610. The processor 604, the memory 606, the input interface 608 and the output interface 610 are connected to the bus 602. The processor 604 can read a program (or instruction) from the memory 606 and execute the program (or instruction) to process data; and the processor 604 may also write data or programs (or instructions) into the memory 606. The memory 606 can store programs (instructions) or data. By executing the instructions in the memory 606, the processor 604 can control the memory 606, the input interface 608 and the output interface 610. In the present application, the memory 606 can store programs for executing the flow shown in FIG. 2 and operation parameters required for executing the programs.

The input interface 608 is configured to measure or collect actual outlet water temperature parameters of chilled water, and detect pressure parameters of the evaporator 108 and pressure parameters of the condenser 104 through an outlet water temperature sensor 116, an evaporator pressure sensor 132 and a condenser pressure sensor 134 respectively through connection lines 142, 144, and 146, convert these parameter data into signals recognizable by the processor 604 and store them in the memory 606.

The processor 604 is configured to calculate an amount of change of hot gas bypass valve opening according to the programs stored in the memory 606, and send a valve opening change amount regulation signal to the output interface 610. The output interface 610 is configured to receive the valve opening change amount regulation signal from the processor 604, convert the valve opening change amount regulation signal into a valve control signal suitable for the hot gas bypass valve 110, and transmit the valve control signal to the hot gas bypass valve 110 through a connection line 151 to perform valve opening regulation.

The method for regulating a system load by means of hot gas bypass of the present application has the following advantages over the control methods in the prior art:

First, relative to the single PID control mode in the prior art, on the basis of different fluctuation trends of a water temperature with regard to approaching or deviating from a target value, in the present application, an independent PID control mode is separately used, i.e., a dual-PID control mode, so that the system controls the water temperature more precisely and stably, and the amplitude of fluctuation of the water temperature is smaller.

Second, relative to the single PID control mode in the prior art, the water temperature fluctuation is more stable under the dual-PID control mode of the present application, so that the valve opening regulation amplitude of the hot gas bypass valve can be smaller, therefore the air conditioning system is more energy-saving relative to the single PID control mode.

Although the present application has been described in conjunction with the examples of the embodiments outlined above, various alternatives, modifications, changes, improvements and/or substantial equivalents, whether known or now or soon foreseeable, may be obvious to those skilled in the art. In addition, the technical effects and/or technical problems described in the specification are exemplary rather than restrictive; and therefore, the disclosure in the specification may be used for solving other technical problems and have other technical effects and/or can solve other technical problems. Accordingly, the examples of the embodiments of the present application set forth above are intended to be illustrative rather than restrictive. Various changes may be made without departing from the spirit or scope of the present application. Accordingly, the present application is intended to include all known or earlier developed alternatives, modifications, variations, improvements and/or substantial equivalents.

## Claims

1. A method for regulating a system load by means of hot gas bypass, comprising the following steps:
S01, acquiring a real-time outlet water temperature and a target outlet water temperature;
S02, determining a relationship between magnitudes of the real-time outlet water temperature and the target outlet water temperature and a trend of change in an absolute value of a difference between the real-time outlet water temperature and the target outlet water temperature;
S03, on the basis of the relationship between the magnitudes of the real-time outlet water temperature and the target outlet water temperature and the trend of change in the absolute value of the difference between the real-time outlet water temperature and the target outlet water temperature that are determined in step S02, determining an amount of change in valve opening of the hot gas bypass; and
S04, on the basis of the amount of change in the valve opening determined in step S03, regulating the valve opening of the hot gas bypass, thereby regulating the system load.

2. The method for regulating a system load by means of hot gas bypass according to claim 1, wherein:
steps S01 to S04 are cyclically executed in a set water temperature regulating period.

3. The method for regulating a system load by means of hot gas bypass according to claim 1, wherein:
in step S03, if the absolute value of the difference between the real-time outlet water temperature and the target outlet water temperature has an increasing trend, a first PID control method is used to determine the amount of change in the valve opening of the hot gas bypass; or
if the absolute value of the difference between the real-time outlet water temperature and the target outlet water temperature has a decreasing trend, a second PID control method is used to determine the amount of change in the valve opening of the hot gas bypass.

4. The method for regulating a system load by means of hot gas bypass according to claim 1, wherein:
in step S03, if the real-time outlet water temperature is greater than the target outlet water temperature and the absolute value of the difference between the real-time outlet water temperature and the target outlet water temperature has an increasing trend, the valve opening of the hot gas bypass is decreased in step S04;
if the real-time outlet water temperature is less than the target outlet water temperature and the absolute value of the difference between the real-time outlet water temperature and the target outlet water temperature has an increasing trend, the valve opening of the hot gas bypass is increased in step S04;
if the real-time outlet water temperature is greater than the target outlet water temperature and the absolute value of the difference between the real-time outlet water temperature and the target outlet water temperature has a decreasing trend, the valve opening of the hot gas bypass is decreased in step S04; or
if the real-time outlet water temperature is less than the target outlet water temperature and the absolute value of the difference between the real-time outlet water temperature and the target outlet water temperature has a decreasing trend, the valve opening of the hot gas bypass is increased in step S04.

5. The method for regulating a system load by means of hot gas bypass according to claim 3, wherein:
the first PID control method has a first set of control parameters, and
the second PID control method has a second set of control parameters,
wherein the first set of control parameters is different from the second set of control parameters, and the first set of control parameters and the second set of control parameters are acquired through system debugging.

6. The method for regulating a system load by means of hot gas bypass according to claim 5, wherein:
the first set of control parameters comprises a first proportional coefficient, a first integral time constant, and a first derivative time constant, and
the second set of control parameters comprises a second proportional coefficient, a second integral time constant, and a second derivative time constant.

7. The method for regulating a system load by means of hot gas bypass according to claim 1, wherein:
when the trend of change in the absolute value of the difference between the real-time outlet water temperature and the target outlet water temperature increases, an amplitude of change in the amount of change in the valve opening increases, or
when the trend of change in the absolute value of the difference between the real-time outlet water temperature and the target outlet water temperature decreases, the amplitude of change in the amount of change in the valve opening decreases.

8. The method for regulating a system load by means of hot gas bypass according to claim 1, wherein:
when an operating pressure ratio of a system increases, an amplitude of change in the amount of change in the valve opening decreases, or
when the operating pressure ratio of the system decreases, the amplitude of change in the amount of change in the valve opening increases.

9. An air conditioning system, comprising a unit, a sensor, and a controller, wherein the sensor acquires a real-time outlet water temperature from the unit, wherein:
the air conditioning system further comprises a hot gas bypass path, the hot gas bypass path is provided with a hot gas bypass valve, wherein
the controller regulates a load of the system according to the method for regulating a system load by means of hot gas bypass according to any one of claims 1-8.
